# FASCICULE DE BREVET EUROPEEN

(11) **EP 3 371 445 B1**
(45) Date de publication et mention de la délivrance du brevet: **15.01.2020**
(21) Numéro de dépôt: 16809119.7
(22) Date de dépôt: 25.10.2016
(51) Int. Cl.: F02K 1/04, F02C 7/06, F01D 25/18, F01D 25/28, F01D 25/30

(54) **TUBE DE DÉGAZAGE ET CÔNE D'ÉJECTION POUR UNE TURBOMACHINE, AINSI QUE LEUR OUTILLAGE DE MONTAGE**
ABGASROHR UND AUSLASSKONUS FÜR EINEN TURBINENMOTOR SOWIE WERKZEUG ZU DESSEN MONTAGE
VENTING TUBE AND EJECTION CONE FOR A TURBINE ENGINE, AS WELL AS TOOL FOR ASSEMBLY THEREOF

(30) Priorité: 04.11.2015 FR 1560563
(43) Date de publication de la demande: 12.09.2018
(73) Titulaire: Safran Aircraft Engines, 75015 Paris (FR)
(72) Inventeur: BERNARD, Samuel, Louis-Marie, 77550 Moissy Cramayel (FR)
(74) Mandataire: Gevers & Orès
(86) Numéro de dépôt international: PCT/FR2016/052765
(87) Numéro de publication internationale: WO 2017/077219

(56) Documents cités:
- WO-A2-2014/072626
- WO-A2-2014/072643
- FR-A- 1 103 224

## Description

### DOMAINE TECHNIQUE

La présente invention concerne notamment un tube de dégazage et un cône d'éjection pour une turbomachine, en particulier d'aéronef. Elle concerne également un module comportant ces deux organes, ainsi qu'un outillage et un procédé de montage de ce module.

### ETAT DE L'ART

L'état de l'art comprend notamment les documents WO-A2-2014/072643, WO-A2-2014/072626 et FR-A-1 103 224.

Une turbomachine, telle qu'un turboréacteur à double flux, comprend classiquement une entrée d'air comportant une soufflante dont le flux d'air en sortie se divise en un flux d'air qui pénètre dans le moteur et forme un flux chaud ou flux primaire, et en un flux d'air qui s'écoule autour du moteur et qui forme un flux froid ou flux secondaire.

Le moteur comprend typiquement d'amont en aval, dans le sens d'écoulement des gaz, au moins un compresseur, une chambre de combustion, au moins une turbine, et une tuyère d'éjection dans laquelle les gaz de combustion sortant de la turbine et formant le flux primaire sont mélangés au flux secondaire.

A son extrémité aval, la turbomachine comprend un cône d'éjection du flux primaire voire du mélange flux primaire-flux secondaire. Ce cône a une forme allongée dont l'extrémité amont de plus grand diamètre est fixée à un élément de la turbomachine, tel qu'un carter.

De façon classique, un tube de dégazage traverse longitudinalement le cône d'éjection. Ce tube a pour fonction d'extraire et de canaliser l'air déchargé d'huile par les déshuileurs de la turbomachine et de l'éjecter à l'atmosphère par l'extrémité aval du tube, située sensiblement au niveau de l'extrémité aval du cône d'éjection.

Le document WO-A1-2011/117560 décrit un tube de dégazage de turbomachine.

Le tube de dégazage a une forme allongée et peut comprendre à une extrémité longitudinale des moyens de fixation à un élément de la turbomachine. Le tube de dégazage est dans ce cas monté en porte à faux sur cet élément, ce qui n'est pas satisfaisant pour des raisons de tenue aux sollicitations dynamiques.

Par ailleurs, lorsque le cône d'éjection a une forme non axisymétrique et a par exemple ses extrémités amont et aval qui ne sont pas alignées, le montage du module comportant le tube et le cône est complexe. Le tube est préalablement monté sur la turbomachine et une fois que le cône est monté sur la turbomachine, le tube n'est plus accessible. En plus des difficultés liées à la forme du cône, la position relative du tube par rapport au cône peut varier de quelques millimètres du fait des tolérances de fabrication des pièces.

La présente invention propose une solution pour répondre à au moins une partie des problèmes évoqués ci-dessus, de manière simple, efficace et économique.

### EXPOSE DE L'INVENTION

L'invention propose un tube de dégazage pour une turbomachine d'aéronef, ce tube ayant une forme allongée et comportant à une extrémité longitudinale des moyens de fixation à un élément de la turbomachine, le tube comprenant en outre à sa périphérie externe et à distance de ladite extrémité des premiers moyens de centrage configurés pour coopérer avec des seconds moyens de centrage d'un cône d'éjection de la turbomachine destiné à être traversé par ledit tube caractérisé en ce que lesdits premiers moyens de centrage sont formés par une surépaisseur dudit tube et ont en section transversale une forme périphérique polygonale et comprennent une rangée annulaire de surfaces externes d'appui.

L'invention permet ainsi d'assurer le centrage et le support du tube à l'intérieur du cône.

Le tube selon l'invention peut comprendre une ou plusieurs des caractéristiques suivantes, prises isolément les unes des autres ou en combinaison les unes avec les autres :
- lesdites surfaces externes d'appui sont planes,
- lesdits premiers moyens de centrage ont en section transversale une forme périphérique hexagonale.

L'invention concerne également un cône d'éjection pour une turbomachine d'aéronef, ce cône ayant une forme allongée et comportant à une extrémité longitudinale des moyens de fixation à un élément de la turbomachine, le cône comprenant en outre à sa périphérie interne et à distance de ladite extrémité des seconds moyens de centrage configurés pour coopérer avec des premiers moyens de centrage d'un tube de dégazage de la turbomachine destiné à traverser ledit cône, le cône comprenant au moins un raidisseur annulaire à sa périphérie interne, lesdits seconds moyens de centrage étant fixés de manière amovible sur ledit raidisseur, caractérisé en ce que lesdits seconds moyens de centrage comprennent une rangée annulaire de pattes configurées pour prendre appui radialement sur lesdits premiers moyens de centrage.

Le cône selon l'invention peut comprendre une ou plusieurs des caractéristiques suivantes, prises isolément les unes des autres ou en combinaison les unes avec les autres :
- lesdites pattes sont portées par un premier disque qui est fixé à un second disque, un troisième disque étant intercalé et serré entre lesdits premier et second disques et étant fixé audit raidisseur, lesdits premier, second et troisième disques s'étendant autour de l'axe longitudinal du cône,
- lesdits premier et second disque sont fixés ensemble par des vis qui traversent des premiers orifices ou encoches dudit troisième disque, et ledit troisième disque est fixé audit raidisseur par des vis qui traversent des seconds orifices ou encoches dudit second disque intercalé entre ledit troisième disque et ledit raidisseur, lesdites premiers et seconds orifices ou encoches étant configurés ayant des plus grandes dimensions transversales que celles desdites vis correspondantes afin d'autoriser des déplacements relatifs en direction radiale entre lesdits premier et second disques, d'une part, et lesdits troisième disque et raidisseur, d'autre part.

La présente invention concerne encore un module de turbomachine d'aéronef, comportant un tube et un cône tels que décrit ci-dessus.

La présente invention concerne également une turbomachine, en particulier d'aéronef, caractérisée en ce qu'elle comprend ce module.

La présente invention concerne également un outillage de repérage et de réglage pour le montage d'un module tel que décrit ci-dessus, dans lequel il comprend :
- un premier anneau configuré pour être appliqué et fixé sur un élément de turbomachine et à être également, de manière séquencée (c'est-à-dire qu'il est apte à être fixé à deux pièces mais lorsqu'il est fixé à une pièce, il ne l'est pas à l'autre), appliqué et fixé à une extrémité de plus grand diamètre dudit cône, ledit premier anneau étant configuré pour être traversé par ledit tube,
- un second anneau configuré pour être traversé par ledit tube et pour être logé dans ledit cône,
- des entretoises de liaison des anneaux, qui s'étendent entre les anneaux et sont fixées à ces derniers, ces entretoises étant configurées pour être logées dans ledit cône, et
- un troisième anneau configuré pour être traversé par ledit tube et pour porter, de manière amovible et séquencée, un doigt tubulaire comportant des premiers moyens de centrage sensiblement identiques aux premiers moyens de centrage dudit tube, ledit troisième anneau étant fixé audit second anneau par des moyens autorisant un réglage du désalignement des axes desdits second et troisième anneaux.

Avantageusement, ledit troisième anneau comprend une surface cylindrique interne de centrage qui est configurée pour coopérer avec une surface cylindrique externe dudit doigt et, de manière séquencée, avec une surface cylindrique externe d'une douille tubulaire, cette douille, de préférence sectorisée, comportant une surface cylindrique interne à section transversale de forme polygonale et de préférence hexagonale, qui est complémentaire de celle desdits premiers moyens de centrage dudit tube.

La présente invention concerne enfin un procédé de montage d'un module du type décrit ci-dessus, au moyen d'un outillage tel que décrit ci-dessus, dans lequel il comprend les étapes consistant à :
a) fixer ledit tube à un premier élément de turbomachine et fixer ledit premier anneau de l'outillage à un second élément de turbomachine, de façon à ce que lesdits second et troisième anneaux soient traversés par ledit tube, lesdits moyens de fixation entre lesdits second et troisième anneaux n'étant pas serrés,
b) monter ladite douille autour dudit tube et à l'intérieur dudit troisième anneau, puis serrer lesdits moyens de fixation entre lesdits second et troisième anneaux n'étant pas serrés,
c) démonter l'outillage dudit premier élément de turbomachine, fixer ledit doigt audit troisième anneau, et insérer l'outillage dans ledit cône, de façon à ce que ledit doigt coopère avec lesdits seconds moyens de centrage, qui sont montés fous en direction radiale vis-à-vis dudit cône, puis fixer ledit premier anneau audit cône,
d) fixer rigidement lesdits moyens de centrage vis-à-vis dudit cône, et
e) monter ledit cône autour dudit tube, de façon à ce que lesdits premier et second moyens de centrage coopèrent ensemble, puis fixer ledit cône audit premier élément de turbomachine.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en coupe axiale d'un module de turbomachine, comportant un tube de dégazage et un cône d'éjection,
- la figure 2 est une demi-vue schématique en coupe axiale du module de turbomachine de la figure 1,
- la figure 3 est une vue schématique en perspective d'un module selon l'invention,
- les figures 4 à 6 sont des vues schématiques en perspective de moyens de centrage du tube et du cône du module de la figure 3,
- les figures 7 à 10 sont des vues schématiques en coupe axiale, et certaines en perspective, des moyens de centrage du tube et du cône du module de la figure 3,
- les figures 11 à 18 sont des vues schématiques en perspective d'un outillage de montage du module selon l'invention, et représentent des étapes d'un procédé de montage,
- les figures 19 à 22 sont des vues schématiques en coupe axiale, et certaines en perspective, des moyens de réglage de l'outillage des figures 11 à 18, inséré dans le cône d'éjection, et
- la figure 23 est une vue schématique en perspective d'une extrémité aval de turbomachine.

### DESCRIPTION DETAILLEE

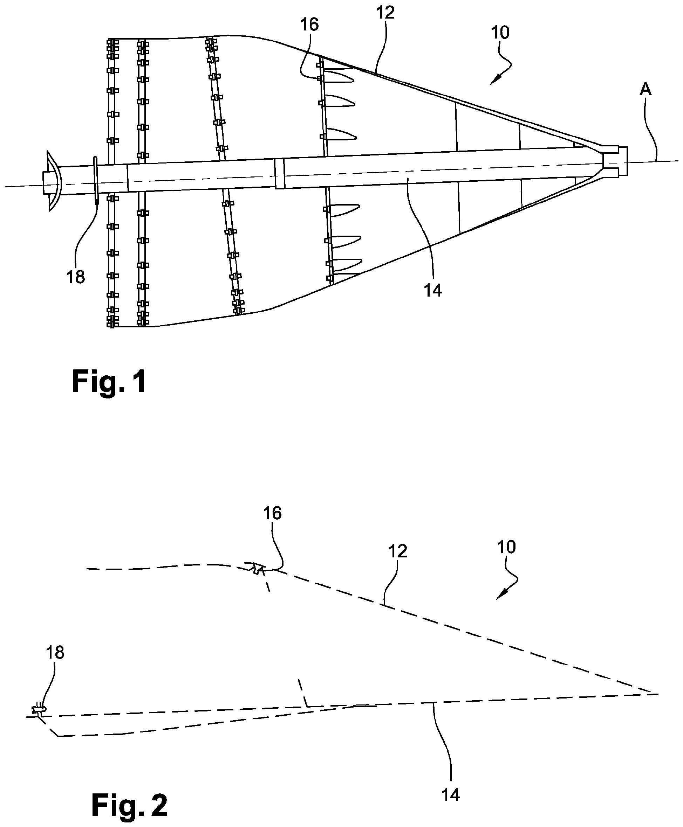

On se réfère d'abord aux figures 1 et 2 qui représentent un module 10 aval ou d'éjection d'une turbomachine, comportant un cône d'éjection 12 s'étendant autour d'un tube de dégazage 14.

Le cône 12 a une forme allongée d'axe A, dont l'extrémité amont de plus grand diamètre est fixée à un élément intermédiaire du module d'éjection, lui-même fixé à un carter de la turbomachine, par exemple au moyen d'une bride annulaire 16.

Le tube de dégazage 14 s'étend le long de l'axe A et a donc également une forme allongée. Il comprend à son extrémité longitudinale amont des moyens, tels qu'une bride 18, de fixation à un élément de la turbomachine.

Ce type de technologie présente des inconvénients et la présente invention permet d'y remédier, au moins en partie, grâce notamment à des moyens de centrage et de support de l'extrémité aval du tube à l'intérieur du cône.

Les figures suivantes illustrent un mode de réalisation de l'invention.

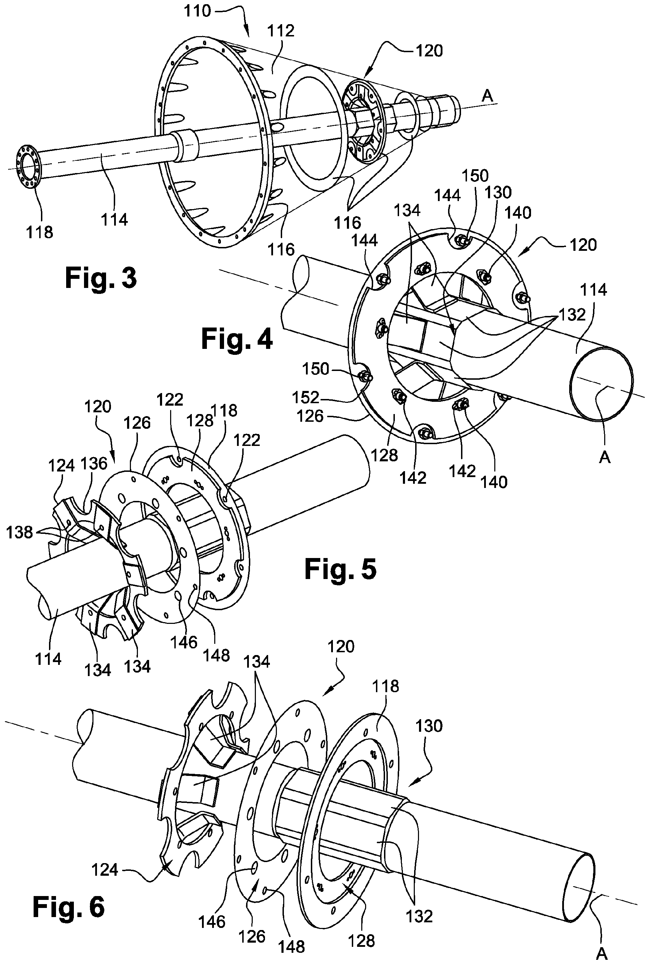

La figure 3 représente un module 110 dans son ensemble, comportant un cône d'éjection 112 et un tube de dégazage 114 traversant longitudinalement le cône et comportant une bride de fixation 116 à son extrémité amont.

Le cône 112 comprend une paroi sensiblement conique ou tronconique qui est ici renforcée par une série de raidisseurs annulaires internes 118 espacés longitudinalement les uns des autres. Il en comprend quatre dans l'exemple représenté.

Un des raidisseurs 118, situé au voisinage de l'extrémité aval du cône, est situé au voisinage de l'extrémité aval de plus petit diamètre du cône et porte des moyens de centrage 120 destinés à coopérer avec des moyens de centrage 130 complémentaires du tube 114.

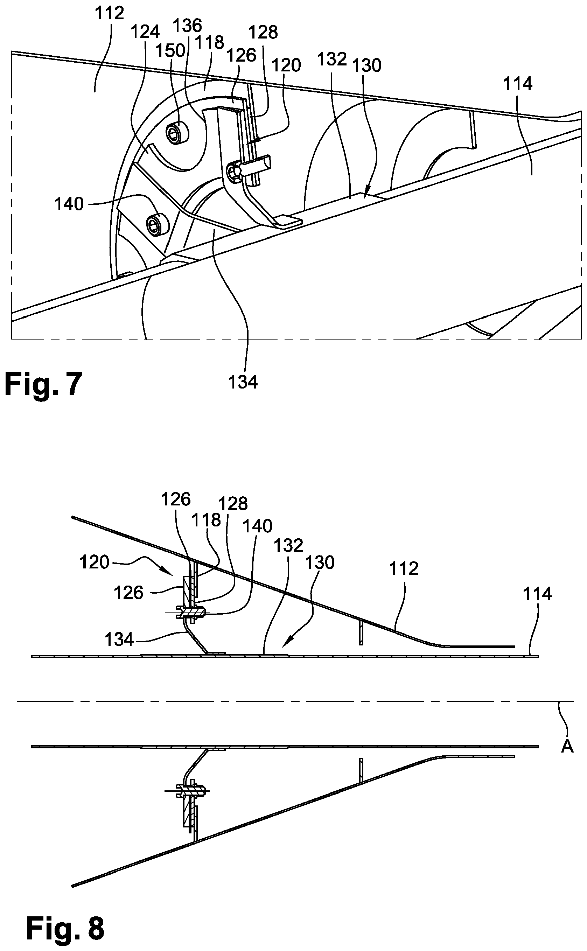

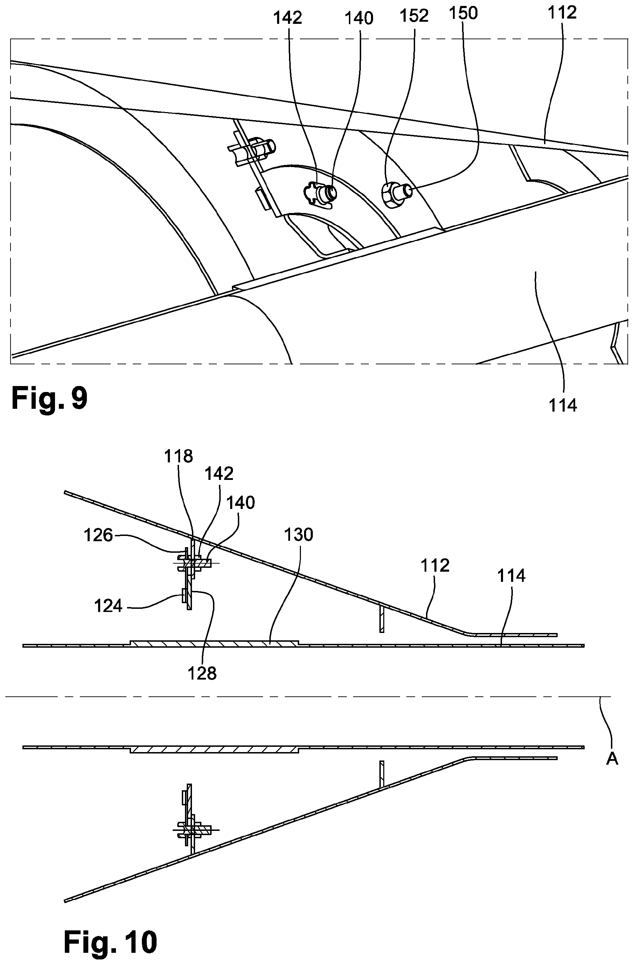

Les moyens de centrage 130 du tube, mieux visibles aux figures 4 à 10, comprennent une rangée annulaire de surfaces externes d'appui 132, de préférence planes. Dans l'exemple représenté, les moyens de centrage 130 sont formés par une surépaisseur du tube et ont en section transversale une forme périphérique polygonale et de préférence hexagonale. On comprend dès lors que chaque côté de l'hexagone définit une des surfaces d'appui précitées, ici au nombre de six régulièrement réparties autour de l'axe A. Les moyens de centrage 130 sont ainsi formés d'une seule pièce avec le tube 114 dans l'exemple représenté.

Le raidisseur 118 du cône, qui porte les moyens de centrage 120, comprend une paroi annulaire plane s'étendant sensiblement radialement vis-à-vis de l'axe A. Cette paroi a un diamètre interne supérieur au diamètre externe du tube 114. Le raidisseur 118 comprend une rangée annulaire d'orifices axiaux 122 de passage de vis.

Les moyens de centrage 120 comprennent trois disques 124, 126, 128 dans l'exemple représenté.

Chaque disque 124, 126, 128 est destiné à être traversé par le tube 114, et a un diamètre interne supérieur au diamètre externe du tube 114.

Le disque 124, appelé disque amont ou premier disque, porte une rangée annulaire de pattes 134 d'appui radial sur les surfaces 132 des moyens de centrage 130 du tube 114. Le nombre de pattes 134 est de préférence égal au nombre de surfaces 132, et est donc de six dans le cas présent.

Les pattes 134, ainsi que les disques 124, 126, 128, sont de préférence réalisés en métal. Chaque patte 134 comprend par exemple un élément de tôle plié de façon à former sensiblement un V. Une branche radialement externe du V est appliquée et fixée par exemple par soudage sur une face, ici amont, du disque 124, et l'autre branche radialement interne du V est rabattue vers l'aval pour s'étendre sensiblement parallèlement à une surface 132 et être apte à venir coopérer par appui plan avec celle-ci.

Comme on le voit dans les dessins, le disque 124 comprend à sa périphérie externe une rangée annulaire d'encoches 136 traversantes en direction axiale.

Le disque 124 comprend en outre une rangée annulaire d'orifices 138 de passage de vis 140 de fixation du disque 124 au disque 128. Les orifices 138 sont ici formés dans les branches radialement externes des pattes 134.

Le disque 128, appelé disque aval ou second disque, a une rangée annulaire d'orifices de passage des vis 140 voire d'écrous prisonniers ou sertis 142 de vissage de ces vis.

Le disque 128 comprend en outre à sa périphérie externe une rangée annulaire d'encoches 144 traversantes en direction axiale.

Le disque 126, appelé disque intermédiaire ou troisième disque, a une première rangée annulaire d'orifices 146 de passage des vis 140 et une seconde rangée annulaire d'orifices 148 de passage de vis 150 de fixation du disque 126 au raidisseur 118 précités, qui traversent les orifices 122.

Les orifices 146 sont situés sur une première circonférence C1 centrée sur l'axe du disque 126, et les orifices 148 sont situés sur une seconde circonférence C2 centrée sur cet axe, C2 étant supérieur à C1.

Le diamètre des orifices 146 est supérieur au diamètre des vis 140 de façon à ce que, en l'absence de serrage des vis, le disque 126 puisse être déplacé dans son plan, qui est un plan sensiblement radial vis-à-vis de l'axe du tube. Ce degré de liberté ou montage fou permet d'autoriser un réglage de la position du disque 126, et donc du cône 112, vis-à-vis du tube 114.

Les encoches 136, 114 ont une fonction similaire aux orifices 146 dans la mesure où elles sont dimensionnées et positionnées pour laisser passer les vis 150 et pour autoriser des déplacements relatifs dans le plan radial précité entre les disques 124, 128, d'une part, et le disque 126 et le raidisseur 118, d'autre part.

Les têtes des vis 140 peuvent être appliquées sur la face amont du disque 124. Les têtes des vis 150 peuvent être appliquées sur la face amont du disque 126 et être vissées dans des écrous 152 prenant appui sur la face aval du raidisseur 124 ou dans des écrous prisonniers ou sertis montés dans les orifices 122 du raidisseur.

On comprend que les disques 124 et 128 sont rendus solidaires par les vis 140. Le disque 126 est intercalé entre les disques 124, 128 et rendu solidaire du raidisseur 124 et donc du cône 112 par les vis 150.

Même dans le cas où le cône 112 a une forme non axisymétrique, le tube 114 est centré et supporté de manière optimale à l'intérieur du cône par coopération des pattes 134 avec les surfaces 132 du tube. Un désalignement de l'axe du tube vis-à-vis de l'extrémité aval du cône est autorisé par les moyens de centrage 120 qui, avant le serrage des vis 140, 150, peuvent être positionnés dans le plan radial de façon à ce que toutes les pattes 134 prennent appui sur les surfaces 132. Le serrage des vis 140, 150 permet alors de figer les positions relatives du cône et du tube.

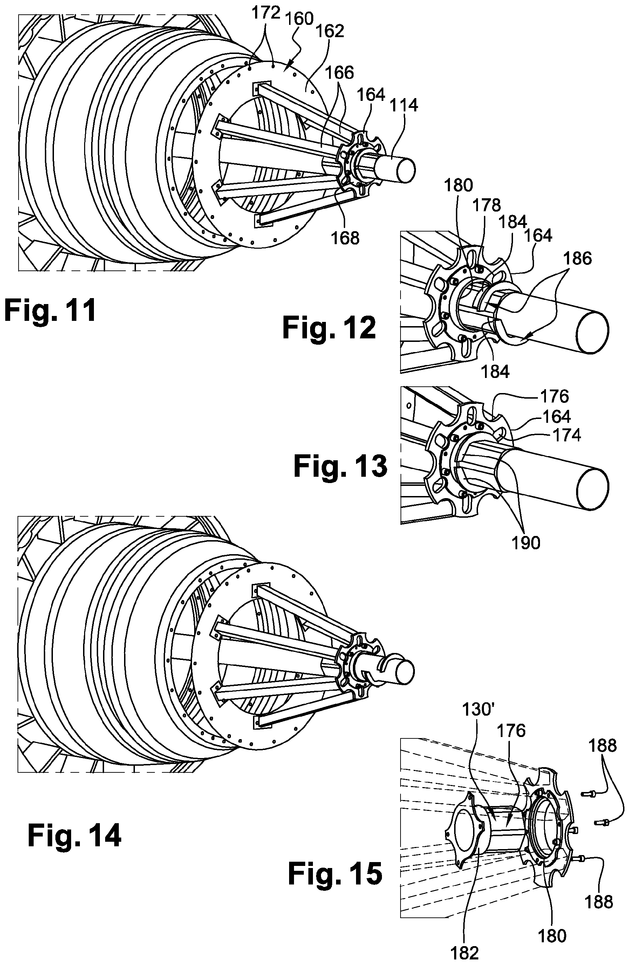

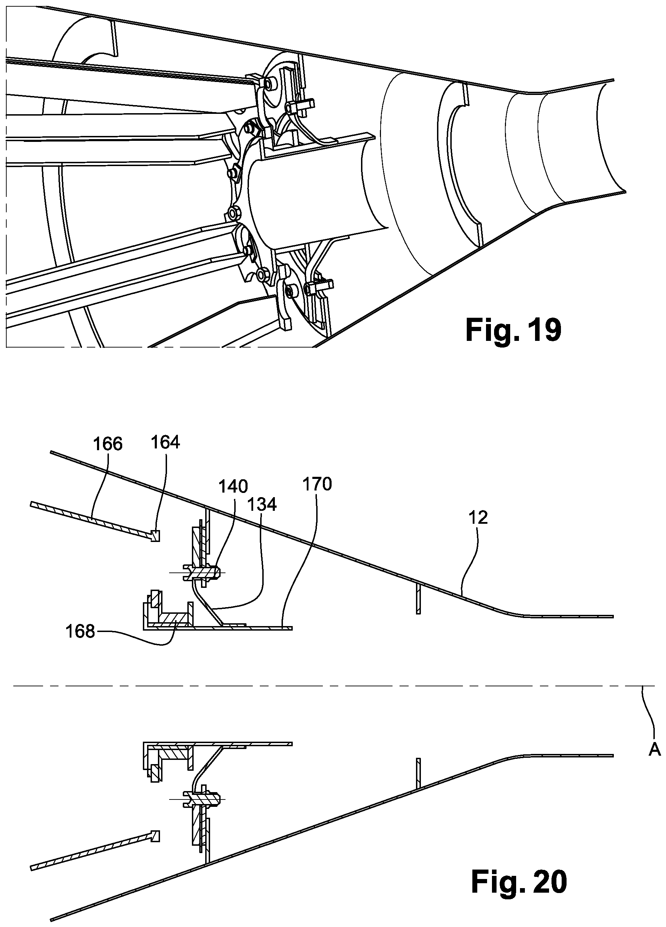

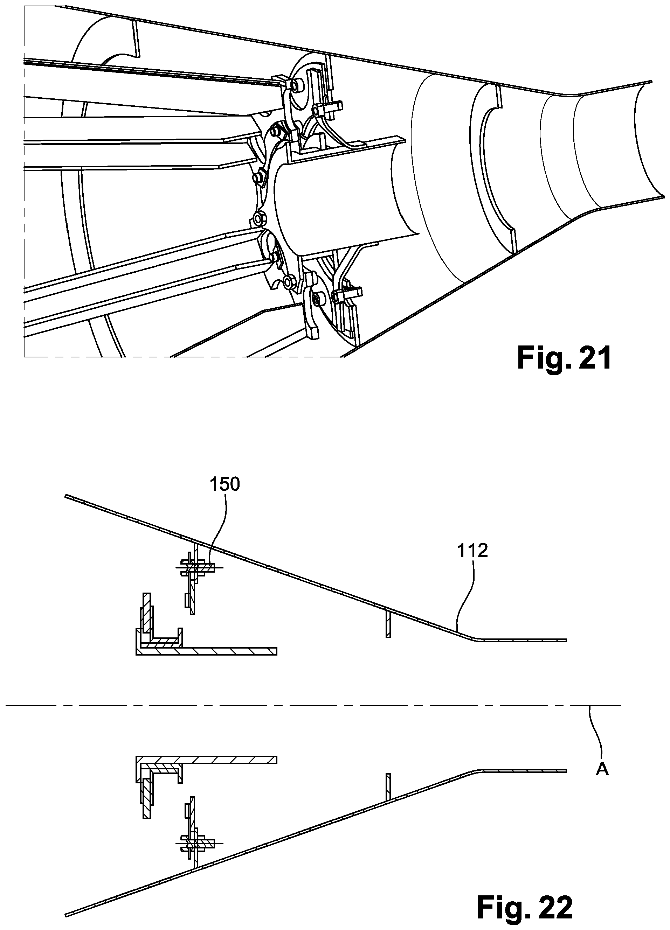

Les figures 11 à 22 montrent un outillage de montage du module sur une turbomachine, ainsi que des étapes du procédé de montage.

L'outillage 160 comprend essentiellement :
- un premier anneau 162 configuré pour être appliqué et fixé sur un élément intermédiaire du module d'éjection, lui-même fixé à un carter de la turbomachine, et à être également, de manière séquencée, appliqué et fixé à l'extrémité de plus grand diamètre du cône, ce premier anneau étant configuré pour être traversé par le tube,
- un second anneau 164 configuré pour être traversé par le tube et pour être logé dans le cône,
- des entretoises 166 de liaison des disques, qui s'étendent entre les disques et sont fixées à ces derniers, ces entretoises étant configurées pour être logées dans le cône, et
- un troisième anneau 168 configuré pour être traversé par le tube et pour porter, de manière amovible et séquencée, un doigt tubulaire 170 comportant des moyens de centrage 130' sensiblement identiques aux moyens de centrage 130 du tube, ce troisième anneau étant fixé au second anneau par des moyens autorisant un réglage du désalignement des axes des second et troisième anneaux.

Le premier anneau 162 est ici formé par une paroi plane, sensiblement radiale. Il comprend une rangée annulaire d'orifices 172 de passage de vis de fixation à l'élément intermédiaire du module d'éjection, ou à l'extrémité aval du cône, par exemple à sa bride annulaire. Il comprend en outre des orifices de passage de vis de fixation des entretoises 166.

Les entretoises 166 sont formées par des barres profilées ici à section transversale en U dont les extrémités longitudinales sont respectivement fixées aux anneaux 162, 164. Les entretoises 166 sont régulièrement réparties autour de l'axe A et sont au nombre de six dans l'exemple représenté. Elles sont inscrites dans une surface tronconique et sont aptes à être engagées, avec les anneaux 164, 168, dans le cône 112.

L'anneau 164 comprend une première rangée annulaire d'orifices 174, ici de forme oblongue. Ces orifices sont situés dans le prolongement longitudinal des barres au niveau de l'ouverture du U de leur section.

L'anneau 164 comprend également une rangée annulaire d'encoches 176 traversantes en direction axiale, située sur la périphérie externe de l'anneau.

L'anneau 164 comprend en outre une seconde rangée annulaire d'orifices de passage de vis 178 portés par le troisième anneau 168. Ces orifices ont un diamètre supérieur au diamètre des vis 178 de façon à ce que l'anneau 168 puisse, avant serrage des vis 178, être déplacé dans un plan radial relativement à l'anneau 164, comme évoqué dans ce qui précède.

Cet anneau 168 comprend une surface cylindrique interne 180 de centrage qui est configurée pour coopérer avec une surface cylindrique externe 182 du doigt 170 (figure 15) et, de manière séquencée, avec une surface cylindrique externe 184 d'une douille tubulaire 186 (figures 12 à 14).

Comme évoqué dans ce qui précède, le doigt 170 est tubulaire et comprend une portion longitudinale, ici amont, portant la surface 182, et une portion longitudinale, ici aval, portant les moyens de centrage 130' à section périphérique externe hexagonale. Le doigt 170 comporte à son extrémité amont une bride annulaire de fixation par des vis 188 à l'anneau 128. On comprend ainsi que le doigt 170 est rendu solidaire de l'anneau 128 par les vis 188, et que sa position radiale relativement à l'anneau 126 est réglable au moyen des vis 178.

La douille 186 est ici sectorisée et comprend deux demi-coquilles, dont le plan de jonction contient l'axe longitudinal de la douille. La douille 186 comporte à sa périphérie externe la surface cylindrique externe 184 et à sa périphérie interne une surface à section transversale de forme polygonale et de préférence hexagonale, qui est complémentaire de celle des moyens de centrage 130, 130'. La douille comprend en outre à son extrémité aval une collerette annulaire 190.

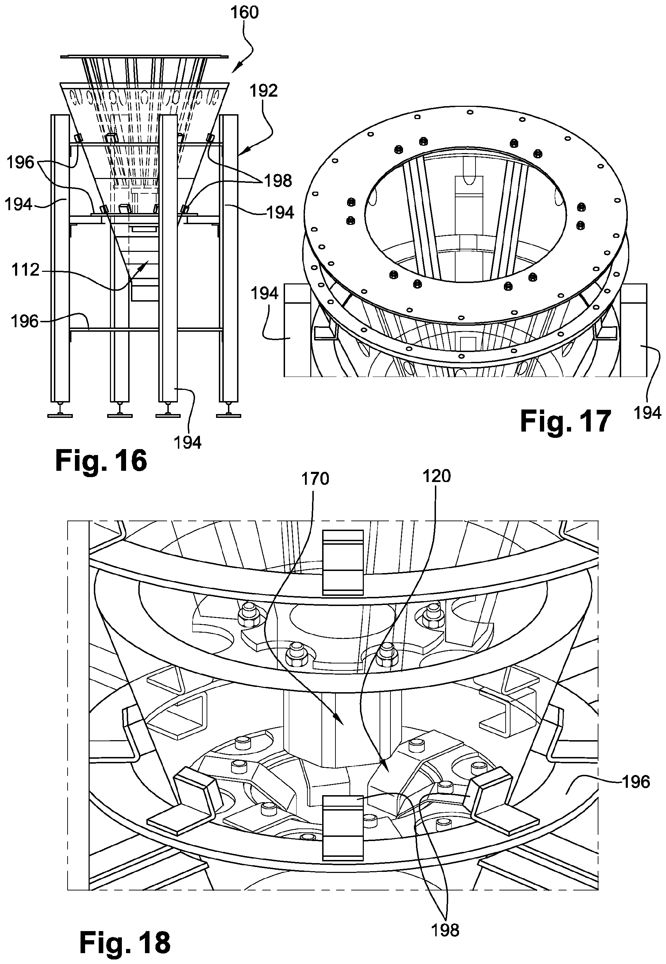

L'outillage peut en outre comprendre un bâti 192 de support du cône lors de l'insertion de l'ensemble formé par les anneaux 162, 164, 168 et les entretoises 166 dans le cône, comme cela est visible aux figures 16 à 18.

Ce bâti 192 comprend quatre montants 194 sensiblement verticaux de support de deux ou trois anneaux 196 sensiblement horizontaux destinés à supporter et maintenir le cône pas des moyens d'appui tels que des patins 198. Comme on le voit dans les dessins, le cône et monté dans le bâti 192 de façon à ce que son axe longitudinal s'étende sensiblement verticalement. Les patins 198 prennent appui sur la surface tronconique externe du cône.

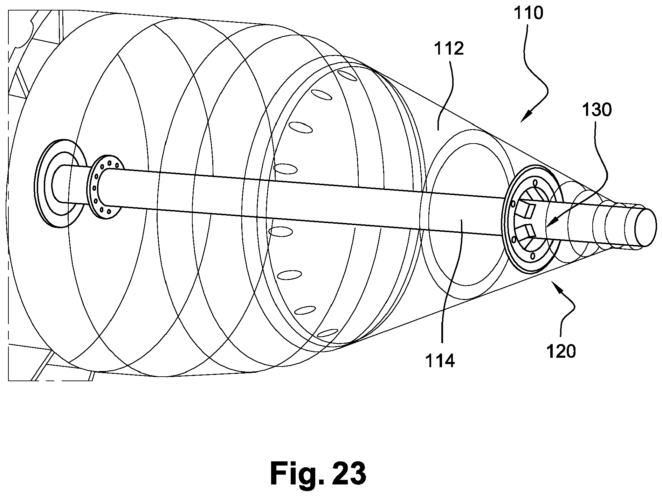

L'utilisation de l'outillage 160 et le montage du module 110 de la figure 23 vont maintenant être décrits en référence aux figures 11 à 22.

L'ensemble formé par les anneaux 162, 164 et 168 et les entretoises 166 est préassemblé, les vis 178 de fixation des anneaux 164, 168 n'étant pas serrées.

Le tube 114 est fixé à l'élément de turbomachine par sa bride aval puis l'anneau 162 de l'outillage est fixé à l'élément intermédiaire du module d'éjection de la turbomachine (figure 11). Le tube traverse alors les anneaux 164, 168 de l'outillage.

Comme cela est visible aux figures 11 à 13, la douille 186 est insérée entre le tube et l'anneau 168, et plus exactement entre les moyens de centrage 130 du tube et la surface cylindrique interne 180 de l'anneau 168.

Cette opération permet de positionner correctement l'anneau 168 vis-à-vis du tube, c'est-à-dire de centrer l'anneau 168 sur le tube. Les vis 178 de fixation des anneaux 164, 168 sont alors serrées pour les immobiliser dans cette position relative.

La douille 186 est ensuite retirée (figure 14). L'outillage 160 peut ensuite être démonté de la turbomachine. Il a servi à repérer la position relative des moyens de centrage 130' vis-à-vis de l'élément intermédiaire du module d'éjection de la turbomachine sur lequel doit être fixé le cône. Le doigt 170 est fixé à l'anneau 168, comme représenté à la figure 15.

Le cône 112 est disposé dans le bâti 192, comme représenté à la figure 16, puis l'outillage 160 ainsi réglé est logé dans le cône jusqu'à ce que le doigt 170 coopère avec les pattes 134 des moyens de centrage 120 et que l'anneau 162 prenne appui sur l'extrémité aval ou la bride du cône (figures 17 et 18). L'outillage peut alors être fixé au cône.

La coopération du doigt 170 avec les pattes 134 permet d'imposer aux pattes des positions relatives précises et correspondant aux positions optimales de centrage du tube. On comprend dès lors que l'outillage sert de moyen de repérage mais aussi de réglage de positions relatives entre deux organes.

Les vis 140, 150 de fixation des disques peuvent alors être serrées comme évoqué dans ce qui précède, pour figer les positions relatives des disques et donc des pattes de centrage 134 vis-à-vis du cône. Pour cela, un opérateur peut avoir accès aux têtes des vis 140, 150 par les orifices 174 et encoches 176 de l'outillage 160.

L'outillage 160 est alors démonté et retiré du cône, qui peut être fixé sur la turbomachine. Le cône est monté autour du tube, de façon à ce que les moyens de centrage 120, 130 coopèrent ensemble, puis le cône est fixé par sa bride amont à l'élément intermédiaire du module d'éjection de la turbomachine (figure 23).

## Revendications

1. Tube de dégazage (114) pour une turbomachine d'aéronef, ce tube ayant une forme allongée et comportant à une extrémité longitudinale des moyens (116) de fixation à un élément de la turbomachine, le tube comprenant en outre à sa périphérie externe et à distance de ladite extrémité des premiers moyens de centrage (130) configurés pour coopérer avec des seconds moyens de centrage (120) d'un cône d'éjection (112) de la turbomachine destiné à être traversé par ledit tube, **caractérisé en ce que** lesdits premiers moyens de centrage (130) sont formés par une surépaisseur dudit tube et ont en section transversale une forme périphérique polygonale et comprennent une rangée annulaire de surfaces externes (132) d'appui.

2. Tube (114) selon la revendication précédente, dans lequel lesdites surfaces externes (132) d'appui sont planes.

3. Tube (114) selon la revendication 1 ou 2, dans lequel lesdits premiers moyens de centrage (130) ont en section transversale une forme périphérique hexagonale.

4. Cône d'éjection (112) pour une turbomachine d'aéronef, ce cône ayant une forme allongée et comportant à une extrémité longitudinale des moyens de fixation à un élément de la turbomachine, le cône comprenant en outre à sa périphérie interne et à distance de ladite extrémité des seconds moyens de centrage (120) configurés pour coopérer avec des premiers moyens de centrage (130) d'un tube de dégazage (114) de la turbomachine destiné à traverser ledit cône, le cône comprenant au moins un raidisseur annulaire (118) à sa périphérie interne, lesdits seconds moyens de centrage (120) étant fixés de manière amovible sur ledit raidisseur, **caractérisé en ce que** lesdits seconds moyens de centrage (120) comprennent une rangée annulaire de pattes (134) configurées pour prendre appui radialement sur lesdits premiers moyens de centrage (130).

5. Cône (112) selon la revendication 4, dans lequel lesdites pattes (134) sont portées par un premier disque (124) qui est fixé à un second disque (128), un troisième disque (126) étant intercalé et serré entre lesdits premier et second disques et étant fixé audit raidisseur, lesdits premier, second et troisième disques s'étendant autour de l'axe longitudinal du cône.

6. Cône (112) selon la revendication précédente, dans lequel lesdits premier et second disques (124, 128) sont fixés ensemble par des vis (140) qui traversent des premiers orifices ou encoches (146) dudit troisième disque (126), et ledit troisième disque est fixé audit raidisseur (118) par des vis (150) qui traversent des seconds orifices ou encoches (144) dudit second disque intercalé entre ledit troisième disque et ledit raidisseur, lesdits premiers et seconds orifices ou encoches ayant des plus grandes dimensions transversales que celles desdites vis correspondantes afin d'autoriser des déplacements relatifs en direction radiale entre lesdits premier et second disques, d'une part, et lesdits troisième disque et raidisseur, d'autre part.

7. Module (110) de turbomachine d'aéronef, comportant un tube (114) selon l'une des revendications 1 à 3 et un cône (112) selon l'une des revendications 4 à 6.

8. Outillage (160) de repérage et de réglage pour le montage d'un module (110) selon la revendication précédente, dans lequel il comprend :
- un premier anneau (162) configuré pour être appliqué et fixé sur un élément de turbomachine et à être également, de manière séquencée, appliqué et fixé à une extrémité de plus grand diamètre dudit cône (112), ledit premier anneau étant configuré pour être traversé par ledit tube,
- un second anneau (164) configuré pour être traversé par ledit tube et pour être logé dans ledit cône,
- des entretoises (166) de liaison des anneaux, qui s'étendent entre les anneaux et sont fixées à ces derniers, ces entretoises étant configurées pour être logées dans ledit cône, et
- un troisième anneau (168) configuré pour être traversé par ledit tube et pour porter, de manière amovible et séquencée, un doigt tubulaire (170) comportant des premiers moyens de centrage (130') sensiblement identiques aux premiers moyens de centrage (130) dudit tube (114), ledit troisième anneau étant fixé audit second anneau par des moyens autorisant un réglage du désalignement des axes desdits second et troisième anneaux.

9. Outillage (160) selon la revendication précédente, dans lequel ledit troisième anneau (168) comprend une surface cylindrique interne (180) de centrage qui est configurée pour coopérer avec une surface cylindrique externe (182) dudit doigt et, de manière séquencée, avec une surface cylindrique externe (184) d'une douille tubulaire (186), cette douille, de préférence sectorisée, comportant une surface cylindrique interne à section transversale de forme polygonale et de préférence hexagonale, qui est complémentaire de celle desdits premiers moyens de centrage (130) dudit tube (114).

10. Procédé de montage d'un module (110) selon la revendication 7, au moyen d'un outillage (160) selon la revendication 9, dans lequel il comprend les étapes consistant à :
a) fixer ledit tube (114) à un premier élément de turbomachine et fixer ledit premier anneau (162) de l'outillage à un second élément de turbomachine, de façon à ce que lesdits second et troisième anneaux (164, 168) soient traversés par ledit tube, lesdits moyens de fixation entre lesdits second et troisième anneaux n'étant pas serrés,
b) monter ladite douille (186) autour dudit tube et à l'intérieur dudit troisième anneau, lesdits moyens de fixation entre lesdits second et troisième anneaux n'étant pas serrés,
c) démonter l'outillage dudit premier élément de turbomachine, fixer ledit doigt (170) audit troisième anneau, et insérer l'outillage dans ledit cône (112), de façon à ce que ledit doigt coopère avec lesdits seconds moyens de centrage (120), qui sont montés fous en direction radiale vis-à-vis dudit cône, puis fixer ledit premier anneau audit cône,
d) fixer rigidement lesdits moyens de centrage (120) vis-à-vis dudit cône, et
e) monter ledit cône autour dudit tube, de façon à ce que lesdits premier et second moyens de centrage (120, 130) coopèrent ensemble, puis fixer ledit cône audit premier élément de turbomachine.

## Patentansprüche

1. Entgasungsrohr (114) für eine Turbomaschine eines Flugzeugs, wobei dieses Rohr eine längliche Form aufweist und an einem Längsende Mittel (116) zum Befestigen an einem Element einer Turbomaschine umfasst, wobei das Rohr weiter an seinem äußeren Umfang und auf Abstand zu dem Ende erste Zentriermittel (130) umfasst, die konfiguriert sind, um mit zweiten Zentriermitteln (120) eines Ausstoßkonus (112) der Turbomaschine zusammenzuwirken, der dazu bestimmt ist, vom Rohr durchquert zu werden, **dadurch gekennzeichnet, dass** die ersten Zentriermittel (130) durch eine Überhöhung des Rohres gebildet werden und im Querschnitt eine polygonale Umfangsform besitzen, und eine ringförmige Anordnung von äußeren Auflageflächen (132) umfassen.

2. Rohr (114) nach dem vorstehenden Anspruch, wobei die äußeren Auflageflächen (132) eben sind.

3. Rohr (114) nach Anspruch 1 oder 2, wobei die ersten Zentriermittel (130) im Querschnitt eine hexagonale Umfangsform besitzen.

4. Ausstoßkonus (112) für eine Turbomaschine eines Flugzeugs, wobei dieser Konus eine längliche Form besitzt und an einem Längsende Mittel zum Befestigen an einem Element der Turbomaschine beinhaltet, wobei der Konus weiter an seinem inneren Umfang und auf Abstand zu dem Ende zweite Zentriermittel (120) umfasst, die konfiguriert sind, um mit ersten Zentriermitteln (130) eines Entgasungsrohres (114) der Turbomaschine zusammenzuwirken, das dazu bestimmt ist, den Konus zu durchqueren, wobei der Konus an mindestens eine ringförmige Versteifung (118) seinem inneren Umfang umfasst, wobei die zweiten Zentriermittel (120) abnehmbar an der Versteifung befestigt sind, **dadurch gekennzeichnet, dass** die zweiten Zentriermittel (120) eine ringförmige Anordnung von Laschen (134) umfassen, die konfiguriert sind, um radial an den ersten Zentriermitteln (130) aufzuliegen.

5. Konus (112) nach Anspruch 4, wobei die Laschen (134) von einer ersten Scheibe (124) getragen werden, die auf einer zweiten Scheibe (128) befestigt ist, wobei eine dritte Scheibe (126) zwischen der ersten und zweiten Scheibe eingesetzt und geklemmt ist und an der Versteifung befestigt ist, wobei sich die erste, zweite und dritte Scheibe um die Längsachse des Konus herum erstrecken.

6. Konus (112) nach dem vorstehenden Anspruch, wobei die erste und zweite Scheibe (124, 128) durch Schrauben (140) zusammen befestigt sind, die erste Öffnungen oder Auskerbungen (146) der dritten Scheibe (126) durchqueren, und die dritte Scheibe durch Schrauben (150) an der Versteifung (118) befestigt ist, die zweite Öffnungen oder Auskerbungen (144) der zweiten Scheibe durchqueren, die zwischen der dritten Scheibe und der Versteifung eingesetzt ist, wobei die ersten und zweiten Öffnungen oder Auskerbungen größere Querabmessungen besitzen als jene der entsprechenden Schrauben, um relative Verschiebungen in radialer Richtung zwischen der ersten und zweiten Scheibe einerseits und der dritten Scheibe und der Versteifung andererseits zu erlauben.

7. Modul (110) einer Turbomaschine eines Flugzeugs, das ein Rohr (114) nach einem der Ansprüche 1 bis 3 und einen Konus (112) nach einem der Ansprüche 4 bis 6 umfasst.

8. Werkzeug (160) zum Markieren und Einstellen für die Montage eines Moduls (110) nach dem vorstehenden Anspruch, wobei es umfasst:
- einen ersten Ring (162), der konfiguriert ist, um an einem Turbomaschinenelement angebracht und befestigt zu werden, und um ebenfalls blockweise an einem Ende mit größerem Durchmesser des Konus (112) angebracht und befestigt zu werden, wobei der erste Ring konfiguriert ist, um von dem Rohr durchquert zu werden,
- einen zweiten Ring (164), der konfiguriert ist, um von dem Rohr durchquert zu werden und um in dem Konus aufgenommen zu werden,
- Abstandhalter (166) zum Verbinden der Ringe, die sich zwischen den Ringen erstrecken und an diesen Letzteren befestigt sind, wobei diese Abstandhalter konfiguriert sind, um in dem Konus aufgenommen zu werden, und
- einen dritten Ring (168), der konfiguriert ist, um von dem Rohr durchquert zu werden, und um abnehmbar und blockweise einen rohrförmigen Stift (170) zu tragen, der erste Zentriermittel (130') umfasst, die im Wesentlichen identisch zu den ersten Zentriermitteln (130) des Rohres (114) sind, wobei der dritte Ring durch Mittel an dem zweiten Ring befestigt ist, die eine Einstellung des Versatzes der Achsen des zweiten und dritten Ringes erlauben.

9. Werkzeug (160) nach dem vorstehenden Anspruch, wobei der dritte Ring (168) eine innere zylindrische Zentrieroberfläche (180) umfasst, die konfiguriert ist, um mit einer äußeren zylindrischen Oberfläche (182) des Stiftes zusammenzuwirken, und blockweise mit einer äußeren zylindrischen Oberfläche (184) einer Steckhülse (186), wobei diese vorzugsweise in Sektoren unterteilte Hülse eine innere zylindrische Oberfläche mit einem Querschnitt in polygonaler, und vorzugsweise hexagonaler Form beinhaltet, die ergänzend zu jener der ersten Zentriermittel (130) des Rohres (114) ist.

10. Verfahren zum Montieren eines Moduls (110) nach Anspruch 7, anhand eines Werkzeugs (160) nach Anspruch 9, wobei es die Schritte umfasst, die darin bestehen:
a) das Rohr (114) an einem ersten Element einer Turbomaschine zu befestigen und den ersten Ring (162) des Werkzeugs an einem zweiten Turbomaschinenelement zu befestigen, sodass der zweite und dritte Ring (164, 168) von dem Rohr durchquert werden, wobei die Befestigungsmittel zwischen dem zweiten und dritten Ring nicht geklemmt sind,
b) die Hülse (186) um das Rohr herum und im Inneren des dritten Rings zu montieren, wobei die Befestigungsmittel zwischen dem zweiten und dritten Ring nicht geklemmt sind,
c) das Werkzeug von dem ersten Turbomaschinenelement abzubauen, den Stift (170) an dem dritten Ring zu befestigen, und das Werkzeug in den Konus (112) einzuführen, sodass der Stift mit den zweiten Zentriermitteln (120) zusammenwirkt, die in radialer Richtung freilaufend gegenüber dem Konus montiert sind, danach den ersten Ring an dem Konus zu befestigen,
d) die Zentriermittel (120) starr gegenüber dem Konus zu befestigen,
und
e) den Konus um das Rohr herum so zu montieren, dass das erste und zweite Zentriermittel (120, 130) gemeinsam zusammenwirken, danach den Konus an dem ersten Turbomaschinenelement zu befestigen.

## Claims

1. Degassing tube (114) for a turbine engine of an aircraft, this tube having an extended form and comprising fixing means (116) to an element of the turbine engine at a longitudinal end, the tube also comprises at its external periphery and at distance from said longitudinal end first centring means (130) configured to co-operate with second centring means (120) of an ejection cone (112) of the turbine engine designed to be traversed by said tube, **characterised in that** said first centring means (130) are formed by an allowance of said tube and have a polygonal peripheral form in cross section and comprise an annular range of external support surfaces (132).

2. Tube (114) according to the preceding claim, in that said external support surfaces (132) are flat.

3. Tube (114) according to claim 1 or 2, in that said first centring means (130) have a hexagonal peripheral form in cross section.

4. Ejection cone (112) for a turbine engine of an aircraft, this cone having an extended form and comprising fixing means to an element of the turbine engine at a longitudinal end, the cone also comprising at its inner periphery and at distance from said longitudinal end second centring means (120) configured to co-operate with first centring means (130) of a degassing tube (114) of the turbine engine designed to traverse said cone, the cone comprising at least one annular stiffener (118) at its inner periphery, said second centring means (120) being fixed in a detachable manner to said stiffener, **characterised in that** said second centring means (120) comprise an annular row of tabs (134) configured to be supported radially on said first centring means (130).

5. Cone (112) according to claim 4, in that said tabs (134) are carried by a first disc (124) which is fixed to a second disc (128), a third disc (126) being inserted and squeezed between said first and second discs and being fixed to said stiffener, said first, second and third discs extending around the longitudinal axis of the cone.

6. Cone (112) according to the preceding claim, in that said first and second discs (124, 128) are fixed together by screws (140) which traverse first holes or slots (146) of said third disc (126), and said third disc is fixed to said stiffener (118) by screws (150) which traverse second holes or slots (144) of said second disc inserted between said third disc and said stiffener, said first and second holes or slots having larger transversal dimensions than those of said corresponding screws in order to allow for relative displacements in a radial direction between said first and second discs, on the one hand, and said third disc and stiffener, on the other hand.

7. Unit (110) of a turbine engine of an aircraft, comprising a tube (114) according to any one of claims 1 to 3 and a cone (112) according to any one of claims 4 to 6.

8. Locating and adjusting tool (160) for the assembly of a unit (110) according to the preceding claim, in that the locating and adjusting tool comprises:
- a first ring (162) configured to be applied and fixed to an element of a turbine engine and to also be, in a sequence manner, applied and fixed to an end of larger diameter of said cone (112), said first ring being configured to be traversed by said tube,
- a second ring (164) configured to be traversed by said tube and to be accommodated in said cone,
- ring connecting struts (166), which extend between the rings and are fixed to the rings, these struts being configured to be accommodated in said cone, and
- a third ring (168) configured to be traversed by said tube and to carry, in a detachable and sequenced manner, a tubular finger (170) comprising first centring means (130') approximately identical to the first centring means (130) of said tube (114), said third ring being fixed to said second ring by means allowing an adjustment of the misalignment of the axes of said second and third rings.

9. Tool (160) according to the preceding claim, in that said third ring (168) comprises an inner cylindrical centring surface (180) which is configured to co-operate with an external cylindrical surface (182) of said finger and, in a sequenced manner, with an external cylindrical surface (184) of a tubular casing (186), this casing, preferably sectioned, comprising an inner cylindrical surface of polygonal, and preferably hexagonal, form in cross section, which is complementary to that of said first centring means (130) of said tube (114).

10. Assembly method of a unit (110) according to claim 7, by means of a tool (160) according to claim 9, which includes the steps of:
a) fixing said tube (114) to a first element of a turbine engine and fixing said first ring (162) of the tool to a second element of the turbine engine, so that said second and third rings (164, 168) are traversed by said tube, said fixing means between said second and third rings not being tightened,
b) mounting said casing (186) around said tube and inside said third ring, said fixing means between said second and third rings not being tightened.
c) detaching the tool from said first element of the turbine engine, fixing said finger (170) to said third ring, and inserting the tool in said cone (112), so that said finger co-operates with said second centring means (120), which are idly mounted in a radial direction with regard to said cone, then fixing said first ring to said cone,
d) rigidly fixing said centring means (120) with regard to said cone, and
e) mounting said cone around said tube, so that said first and second centring means (120, 130) co-operate together, then fixing said cone to said first element of the turbine engine.
